# EUROPÄISCHE PATENTSCHRIFT

(11) **EP 0 996 831 B1**
(45) Veröffentlichungstag und Bekanntmachung des Hinweises auf die Patenterteilung: **10.09.2003**
(21) Anmeldenummer: 98943707.4
(22) Anmeldetag: 15.07.1998
(51) Int. Cl.: F16D 65/56, B60T 13/74, F16D 65/16

(54) **VERSCHLEISSNACHSTELLVORRICHTUNG FÜR SCHEIBENBREMSEN UND VERFAHREN ZUM STEUERN DER VORRICHTUNG**
WEAR ADJUSTING DEVICE FOR DISK BRAKES AND METHOD FOR CONTROLLING THE DEVICE
DISPOSITIF DE RATTRAPAGE D'USURE POUR FREINS A DISQUE ET PROCEDE POUR LA COMMANDE DE CE DISPOSITIF

(30) Priorität: 23.07.1997 DE 19731696
(43) Veröffentlichungstag der Anmeldung: 03.05.2000
(73) Patentinhaber: KNORR-BREMSE Systeme für Nutzfahrzeuge GmbH, 80809 München (DE)
(72) Erfinder: BAUMGARTNER, Hans, D-85368 Moosburg (DE); BIEKER, Dieter, D-83080 Oberaudorf (DE)
(74) Vertreter: Specht, Peter, Dipl.-Phys.
(86) Internationale Anmeldenummer: DE9801982
(87) Internationale Veröffentlichungsnummer: WO99005428

(56) Entgegenhaltungen:
- EP-A- 0 703 133
- DE-A- 3 610 569
- DE-A- 4 131 630
- DE-A- 19 536 695
- DE-C- 19 521 401
- US-A- 4 592 451
- US-A- 4 760 895
- US-A- 4 804 073

## Beschreibung

Die Erfindung betrifft eine Verschleißnachstellvorrichtung für Scheibenbremsen nach dem Oberbegriff des Anspruches 1 und 2 sowie ein Verfahren zum Steuern einer Verschleiß-Nachstellvorrichtung.

Eine gattungsgemäße Verschleiß-Nachstellvorrichtung ist beispielsweise aus der WO 91/19115 bekannt. Die Scheibenbremse mit einseitig vorgesehener Zuspannvorrichtung der WO 91/19115 beinhaltet einen Nockenhebel, der um eine zur Bremsscheibenebene parallele Achse drehbar ist und vorzugsweise über eine Traverse mit einer oder zwei Stellspindeln zusammenwirkt, gegen welche sich ein Bremsbelag abstützt. Die beiden Stellspindeln sind vermittels eines Riemens oder einer Kette gekoppelt. In eine Ausnehmung der einen Stellspindel ragt ein Drehantrieb, welcher vom Nockenhebel antreibbar ist und während des Anlegehubes ein Verschrauben der Stellspindel - und damit über den Zahnriemen auch der zweiten Stellspindel - in Annäherungsrichtung an die Bremsscheibe bewirkt. Der Drehantrieb beinhaltet eine Einwegdrehkupplung sowie eine Drehmoment-Begrenzungs- bzw. Überlastkupplung, durch welche ein ungewolltes Verschrauben der Stellspindeln während des Festbremshubes und des Lösehubes vermieden wird.

Wesentliche Elemente der vorstehend genannten Bremsnachstellung sind die Einwegkupplung und die Überlastkupplung, welche z.B. als reibschlüssig arbeitende Systeme ausgelegt sind (z.B. die Einwegkupplung als Schlingfeder-Freilauf und die Überlastkupplung als Reibrutschkupplung bzw. als Axialzahnkupplung). In der WO 91/19115 wird z.B. in Fig. 5 dargestellt, daß die Überlastkupplung in in Wälzlager. technologie als Kugelkupplung ausgeführt ist, deren Schaltmoment ausschließlich durch die Geometrie der die Kugeln aufnehmenden rampenförmigen Taschen und die Größe der Vorspannkraft bedingt wird. Dieses System hat die Vorteile, quasi frei von Reibungseinflüssen zu sein und sehr hohe Schaltmomente auf kleinem Bauraum zu ermöglichen. Die Einwegkupplung dieses Ausführungsbeispieles ist als Klemmrollen-Hülsenfreilauf realisiert, der über eine sehr hohe Ansprechgenauigkeit verfügt und die Realisierung hoher Übertragungsmomente auf kleinem Bauraum ermöglicht.

Der vorstehend beschriebene Nachsteller hat sich an sich bewährt, benötigt allerdings einige hochpräzise Teile und stellt daher bei der Suche nach weiteren Möglichkeiten zur Senkung der Herstellkosten pneumatischer Scheibenbremsen ein Ziel der Bemühungen dar.

Eine weitere Nachstellvorrichtung sowie ein Verfahren zum Betreiben einer Fahrzeugbremse ist in der DE 195 21 401 C1 offenbart. Nachteilig ist hierbei, daß für die Überwindung des Lüftspiels durch den Nachsteller die Betätigungszeit bzw. Reaktionszeit der Bremse erhöht wird. Die Erfindung nimmt sich der geschilderten Problematik an und schafft einen Nachsteller, der in der Großserienfertigung eine deutliche Kostensenkung gegenüber dem vorstehend beschriebenen System ermöglicht. Die Merkmale zur Lösung dieses Problems sind alternativ in Ansprüchen 1 und 2 angegeben. Vorzugsweise wird ein - insbesondere elektronisch kommutierter - Gleichstrom-Getriebemotor oder aber ev. auch ein Schrittmotor in der bremsenintegrierten Steuerungseinheit so angeordnet, daß das Getriebe-Abtriebselement im Sinne einer Drehbetätigung auf den Verschleiß-Zustellmechanismus der Bremse einwirkt.

Zwar sind elektromotorisch betätigte Scheibenbremsen seit langem bekannt. Aufgrund der zahlreichen Probleme bei ihrer Realisierung (Kosten, Ausfallsicherheit usw.) konnten sie sich jedoch bisher in der Praxis nicht durchsetzen. Die Erfindung geht hier einen anderen Weg, denn sie bleibt letztlich bei dem Konzept einer pneumatisch zugespannten Scheibenbremse; lediglich die Nachstellung der Bremse wird von einem Elektroantrieb ausgeführt. Damit kombiniert die Erfindung in idealer Weise die Vorteile einer pneumatisch betätigten Scheibenbremse (Sicherheit, Zuverlässigkeit) mit den Vorteilen eines Elektroantriebes (niedrige Kosten). Ferner wird durch einen Elektroantrieb die Ansprechzeit beim Nachstellen der Bremse reduziert, das notwendige Lüftspiel läßt sich durch die erfindungsgemäße Nachstellung zwischen Bremsbetätigungen auf einen sehr geringen Wert reduzieren und der Luftverbrauch (bzw. der mit der Erzeugung der Luft verbundene Energieverbrauch) des pneumatischen Systems gesenkt.

Bei zweistempeligen (zweispindeligen) Bremsen erfolgt der Eingriff vorzugsweise auf den Synchronisationsmechanismus (z.B. eine Kette), bei einstempeligen Bremsen vorzugsweise direkt auf das Verschleiß-Zustellelement (Stellspindel).

Vorteilhafte weitere Ausgestaltungen der Erfindung sind den übrigen Unteransprüchen zu entnehmen.

Die Erfindung löst auch das Problem, einen elektromotorischen Nachsteller für eine pneumatisch betätigte Bremse auf möglichst einfach und sichere Weise zu betreiben. Die Merkmale zur Lösung dieses Problems sind alternativ in den Ansprüchen 5 und 6 angegeben. Beide Ansprüche lehren folgende Schrittfolge:
Schritt A: Unmittelbar nach dem vollständigen Abbau des Betätigungsdruckes im Bremszylinder wird eine weitere Zu- bzw. Nachstellbewegung der Stellspindeln ausgeführt, die so lang bemessen ist, daß eine vollständige Aufhebung des Lüftspieles erreicht wird.
Schritt B: Daraufhin wird der Nachstellmechanismus (die Stellspindeln) über über den Elektroantrieb um einen vorgegebenen Betrag zurückgestellt, welcher einem vorgegebenen Soll-Lüftspiel entspricht.

Diese Art der Nachstellung hat die folgenden Vorteile: Da das Lüftspiel beim Betätigen der Bremse in üblicher Weise durch Drehhebel, Exzenter-Traverse und Kolben überwunden wird, wird die Ansprechzeit der Bremse verkürzt. Der erforderliche Bremszylinderhub und damit auch der Druckenergieverbrauch vermindert sich aufgrund des geringen notwendigen Lüftspiels welches ausschließlich zwischen zwei Bremsbetätigungen eingestellt wird. Da das Lüftspiel nach jeder Betätigung der Bremse exakt neu eingestellt wird, ergibt sich unter allen Betriebsbedingungen zudem ein sehr gleichmäßiges Lüftspiel. Im Servicefall wird eine erhebliche Zeitersparnis dadurch erzielt, daß alle Bremsen des Fahrzeuges automatisch in die Servicestellung zum Bremsbelagaustausch gefahren werden können und die Lüftspieleinstellung nach Beendigung des Service ebenso automatisch erfolgt.

Nach jeder Betätigung der Bremse wird der Verschleiß-Nachstellmechanismus im Sinne eines Zustellens so lange angesteuert, bis das Lüftspiel gegen Null geht. Danach wird der Nachstellmechanismus über den Stellmotor um einen vorgegebenen Betrag zurückgestellt, der dem Soll-Lüftspiel entspricht. Es wird also nach Abbau des Betätigungsdruckes des Bremszylinders ein Betätigungsimpuls im Sinne eines Zustellens gegeben, der so lange dauert, daß eine vollständige Aufhebung des Lüftspieles erreicht wird. Im unmittelbaren Anschluß an diesen Zustellimpuls erfolgt dann das Zurückstellen auf das notwendige Soll-Lüftspiel.

Alternativ kann - zur Verminderung der Betätigungshäufigkeit des Nachstellmechanismus - der oben beschriebene Ablauf auch jeweils nur nach einer vorgegebenen Anzahl von Bremsbetätigungen erfolgen.

Nachfolgend wird die Erfindung anhand eines Ausführungsbeispieles unter Bezug auf die Zeichnung näher beschrieben. Es zeigt:

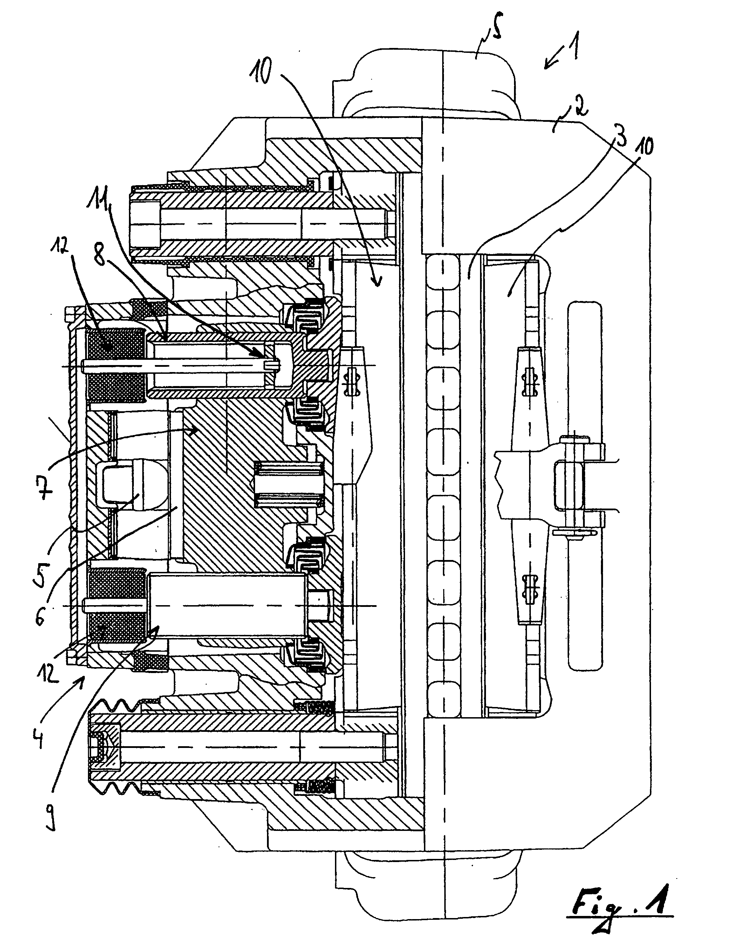

Fig. 1 eine teilgeschnittene Ansicht einer Scheibenbremse mit einem Ausführungsbeispiel eines erfindungsgemäßen Nachstellers.

Zunächst sei kurz Aufbau und Funktion der pneumatischen Scheibenbremse nach Fig. 1 skizziert. Die Scheibenbremse 1 weist einen Bremssattel 2 auf, der eine innenbelüftete Bremsscheibe 3 umgreift. Einseitig der Bremsscheibe 3 ist eine Zuspannvorrichtung 4 vorgesehen, welche einen gleitgelagerten Betätigungs-Drehhebel 5 aufweist, der von einer Kolbenstange eines Druckluftzylinders (nicht dargestellt) bewegt wird und seinerseits einen Exzenter 6 betätigt bzw. dreht, der wiederum über eine Druckstück-Traverse 7 mit zwei Stellspindeln 8, 9 zusammenwirkt, gegen welche sich einer der Bremsbeläge 10 abstützt. Die beiden Stellspindeln 8, 9 sind beispielsweise auch vermittels einer Kette (nicht dargestellt) koppelbar. Eine Feder ist zwischen die Traverse 7 und den Bremssattel 2 gespannt und sorgt so für eine Vorspannung der Traverse 7 in Richtung des Drehhebels 5.

Die Traverse 7 weist an beiden Außenseiten jeweils eine mit Innengewinde versehene Bohrung auf, in welche die mit Außengewinden versehenen Stellspindeln 8 und 9 eingeschraubt sind. In die Ausnehmung der Stellspindeln 8, 9 ragen Drehtriebe 11, die jeweils direkt von Elektromotoren 12 angetrieben werden und relativ zu den Spindeln 8, 9 nicht verdrehbar sind.

Bei einer Beaufschlagung der Bremse mit Druckluft wird der Drehhebel 5 verschwenkt, was den Exzenter 6 dreht und die Traverse 7 zur Bremsscheibe 3 hin verschiebt, so daß sich die Spindeln 8, 9 in Richtung des einen Belages 10 bewegen. Dabei verschiebt sich auch der an einem Bremsträger axial verschiebliche gelagerte Bremssattel S, welcher den anderen Bremsbelag 10 mitnimmt, so daß die Bremse zuspannt.

Nachfolgend sei nunmehr die Funktion des Elektroantriebes des erfindungsgemäßen Verschleißnachstellers beschrieben.

Nach jeder Betätigung der Bremse 1 wird nach Abbau des Bremszylinder-Anlegedruckes der Elektromotor 12 im Sinne eines Zustellens des Nachstellmechanismus angesteuert (Schritt A). Die Spindeln 8, 9 werden also über den Motor 12 und den Drehtrieb 11 so weit in Richtung der Bremsbacken 10 gefahren, bis bei gelöster Bremse das Luftspiel gegen Null geht. Nach erfolgtem vollständigen Druckausgleich am Betätigungskolben der Bremse wird der Elektromotor 12 dann (nach einer entsprechend bemessenen Steuerungsformel) soweit in Löserichtung bewegt, daß ein vorgegebenes Lüftspiel zwischen den Bremsbacken 10 und der Bremsscheibe 3 erzielt wird.

Das vorstehend beschriebene Verfahren ist u.a. deshalb besonders vorteilhaft, da es ohne zusätzliche Sensorelemente auskommt, welche die Kosten der Nachstellvorrichtung wieder unerwünscht verteuern würden.

Nach der Variante der Fig. 1 weist jede der Spindel 8, 9 einen der elektrischen Stellmotoren 12 auf, die bei Überschreiten eines Lüftspielweges die beiden Stellspindeln nachstellen. Dabei kann durch eine entsprechende Auswertlogik im elektrischen Bremssystem (beispielsweise in Form einer Ergänzungssoftware zum ABSoder EBS-Steuergerät) der Belagverschleiß im allgemeinen und ein eventuell auftretender Belagschrägverschleiß überwacht und ggf. korrigiert werden. Desweiteren ist es vorteilhaft, in den Verschlußdeckel 13 die elektrischen Leitungen zu integrieren, so daß bei der Montage des Deckels auch bereits die notwendigen Anschlüsse installiert sind.

## Patentansprüche

1. Verschleiß-Nachstellvorrichtung für eine pneumatisch betätigte Scheibenbremse für Fahrzeuge, bei der
a) ein beim Bremsen betätigter Drehhebel (5) auf wenigstens ein verschiebliches Element (7) einwirkt, welches mindestens zwei Stellspindeln (8, 9) betätigt, die einen Bremsbelag in Richtung einer Bremsscheibe drücken;
b) wobei die Nachstellvorrichtung so ausgebildet ist, daß sie die Stellspindeln (8, 9) durch Weiterdrehen nachstellt;
c) ein Synchronisationsmechanismus zum Synchronisieren der Nachstellbewegungen der Stellspindeln (8, 9) vorgesehen ist
**dadurch gekennzeichnet, daß**
d) die Nachstellvorrichtung einen Elektroantrieb (12) aufweist, welcher die beiden Stellspindeln (8, 9) drehend nachstellt, und
e) der Elektroantrieb (12) derart angeordnet ist, daß er auf den Synchronisationsmechanismus einwirkt.

2. Verschleiß-Nachstellvorrichtung für eine pneumatisch betätigte Scheibenbremse für Fahrzeuge , bei der
a) ein beim Bremsen betätigter Drehhebel (5) auf wenigstens ein verschiebliches Element (7) einwirkt, das eine Stellspindel (8, 9) betätigt, die einen Bremsbelag in Richtung einer Bremsscheibe drückt;
b) wobei die Nachstellvorrichtung so ausgebildet ist, daß sie die Stellspindel (8, 9) durch Weiterdrehen nachstellt;
**dadurch gekennzeichnet, daß**
c) die Nachstellvorrichtung einen Elektroantrieb (12) aufweist, welcher die Stellspindel (8, 9) drehend nachstellt, und
d) der Elektroantrieb (12) derart angeordnet ist, daß er direkt auf die Stellspindel (8,9) einwirkt.

3. Verschleiß-Nachstellvorrichtung nach Anspruch 1, **dadurch gekennzeichnet, daß** der Elektroantrieb als kommutierter Gleichstrom-Getriebemotor (12) ausgebildet ist.

4. Verschleiß-Nachstellvorrichtung nach einem der vorstehenden Ansprüche, **dadurch gekennzeichnet, daß** elektrische Steuer- und/oder Versorgungsleitungen in einen Verschlußdeckel (13) der Bremse integriert sind.

5. Verfahren zum Steuern einer Verschleiß-Nachstellvorrichtung nach einem der vorstehenden Ansprüche, **gekennzeichnet durch** folgende Schrittfolge:
A) nach dem vollständigen Abbau des Betätigungsdruckes im Bremszylinder wird eine weitere Zu- bzw. Nachstellbewegung der Stellspindel(n) (8, 9) ausgeführt, die derart bemessen ist, daß eine vollständige Aufhebung des Lüftspieles erreicht wird,
B) die Stellspindeln (8, 9) wird/werden **durch** den Elektroantrieb (12) um einen vorgegebenen Betrag zurückgestellt, welcher einem vorgegebenen Soll-Lüftspiel entspricht.

6. Verfahren zum Steuern einer Verschleiß-Nachstellvorrichtung für eine pneumatisch betätigte Scheibenbremse für Fahrzeuge, bei der
a) ein beim Bremsen betätigter Drehhebel (5) auf wenigstens ein verschiebliches Element (7) einwirkt, welches wenigstens eine, vorzugsweise zwei Stellspindeln (8, 9) betätigt, die einen Bremsbelag in Richtung einer Bremsscheibe drücken;
b) wobei die Nachstellvorrichtung so ausgebildet ist, daß sie die Stellspindel(n) (8, 9) durch Weiterdrehen nachstellt;
c) die Nachstellvorrichtung einen Elektroantrieb (12) aufweist, welcher die Stellspindel(n) (8, 9) drehend nachstellt,
**gekennzeichnet durch** folgende Schrittfolge:
A) nach dem vollständigen Abbau des Betätigungsdruckes im Bremszylinder wird eine Nachstellbewegung der Stellspindel(n) (8, 9) ausgeführt, die derart bemessen ist, daß eine vollständige Aufhebung des Lüftspieles erreicht wird,
B) die Stellspindeln (8, 9) wird/werden **durch** den Elektroantrieb (12) um einen vorgegebenen Betrag zurückgestellt, welcher einem vorgegebenen Soll-Lüftspiel entspricht.

7. Verfahren nach Anspruch 5 oder 6, **dadurch gekennzeichnet, daß** eine Nachstellung jeweils beim Erreichen einer vorgegebenen Anzahl von Bremsbetätigungen erfolgt.

8. Verfahren nach einem der Ansprüche 5 bis 7, **dadurch gekennzeichnet, daß** der Belagverschleiß und/oder ein eventuell auftretender Belagschrägverschleiß überwacht und korrigiert werden.

## Claims

1. Wear readjusting device for a pneumatically operated disc brake for vehicles, wherein
(a) a rotary lever (5) operated during brake application acts upon at least one displaceable element (7) that operates at least two adjusting spindles (8, 9) pressing a brake lining in a direction towards a brake disc;
(b) with the readjusting device being configured in a way that it readjusts said adjusting spindles (8, 9) by continuing their rotary movement;
(c) a synchronising mechanism is provided for synchronising the readjusting movements of said adjusting spindles (8, 9),
**characterised in that**
(d) the readjusting device comprises an electric drive system (12) that readjusts said two adjusting spindles (8, 9) by rotary movement, and
(e) said electric drive system (12) is arranged in such a way that it acts upon said synchronising mechanism.

2. Wear readjusting device for a pneumatically operated disc brake for vehicles, wherein
(a) a rotary lever (5) operated during brake application acts upon at least one displaceable element (7) that operates an adjusting spindle (8, 9) pressing a brake lining in a direction towards a brake disc;
(b) with the readjusting device being configured in a way that it readjusts said adjusting spindle (8, 9) by a rotary movement,
**characterised in that**
(c) said readjusting device comprises an electric drive system (12) that readjusts said adjusting spindle (8, 9) by a rotary movement, and
(d) said electric drive system (12) is arranged in such a way that it acts upon said adjusting spindle (8, 9) directly.

3. Wear readjusting device according to Claim 1, **characterised in that** said electric drive system is configured in the form of a commuted direct-current gear motor (12).

4. Wear readjusting device according to any of the preceding claims, **characterised in that** electric control and/or supply lines are integrated into a closing cover (13) of the brake.

5. Method of controlling a wear readjusting device according to any of the preceding claims, **characterised by** the following sequence of steps:
(A) after complete reduction of the operating pressure in the brake cylinder, a further feed or readjusting movement of said adjusting spindle(s) (8, 9) is carried out which is so dimensioned that a complete elimination of the ventilation free play is achieved;
(B) said adjusting spindle(s) (8, 9) is/are reset by a predetermined amount by means of an electric drive system (12), which corresponds to a predetermined set ventilation free play.

6. Method of controlling a wear readjusting device for a pneumatically operated disc brake for vehicles, wherein
(a) a rotary lever (5) operated during brake application acts upon at least one displaceable element (7) that operates at least one preferably two adjusting spindles (8, 9), pressing a brake lining in a direction towards a brake disc;
(b) with said readjusting device being configured in a way that it readjusts said adjusting spindles (8, 9) by continuing their rotary movement;
(c) with said readjusting device comprising an electric drive system (12) that readjusts said adjusting spindle(s) (8, 9) by a rotary movement,
**characterised by** the following sequence of steps:
(A) after complete reduction of the operating pressure in the brake cylinder, a readjusting movement of said adjusting spindle(s) (8, 9) is carried out which is so dimensioned that a complete elimination of the ventilation free play is achieved;
(B) said adjusting spindle(s) (8, 9) is/are reset by a predetermined amount by means of an electric drive system (12), which corresponds to a predetermined set ventilation free play.

7. Method according to Claim 5 or 6, **characterised in that** readjustment is carried out as soon as a predetermined number of brake application operations is achieved.

8. Method according to any of the Claims 5 to 7, **characterised in that** the lining wear and/or a possibly occurring inclined lining wear is/are monitored and corrected.

## Revendications

1. Dispositif à rattraper le jeu dû à l'usure pour un frein à disque à commande pneumatique pour véhicules, dans lequel
(a) un levier rotatif (5) commandé au cours du serrage du frein agit sur au moins un élément déplaçable (7) qui commande au moins deux tiges de rattrapage (8, 9) pressant une gamiture de frein en une direction vers un disque à frein;
(b) ledit dispositif de rattrapage étant configuré d'une façon telle que rattrape le jeu desdites tiges de rattrapage (8, 9) en continuant leur mouvement rotatoire;
(c) un mécanisme de synchronisation est disposé pour la synchronisation des mouvements de rattrapage du jeu desdites tiges de rattrapage (8, 9),
**caractérisé en ce que**
(d) le dispositif de rattrapage comprend un système d'entraînement électrique (12) qui rattrape le jeu desdites deux tiges de rattrapage (8, 9) par un mouvement rotatoire, et
(e) ledit système d'entraînement électrique (12) est disposé d'une façon telle qu'il agisse sur ledit mécanisme de synchronisation.

2. Dispositif à rattraper le jeu dû à l'usure pour un frein à disque à commande pneumatique pour véhicules, dans lequel
(a) un levier rotatif (5) commandé au cours du serrage du frein agit sur au moins un élément déplaçable (7), qui commande une tige de rattrapage (8, 9) pressant une garniture de frein en une direction vers un disque à frein;
(b) ledit dispositif de rattrapage étant configuré d'une façon telle que rattrape le jeu desdites tiges de rattrapage (8, 9) en continuant leur mouvement rotatoire;
**caractérisé en ce que**
(c) ledit dispositif de rattrapage comprend un système d'entraînement électrique (12) qui rattrape le jeu de ladite tige de rattrapage (8, 9) par un mouvement rotatoire, et
(d) ledit système d'entraînement électrique (12) est disposé d'une façon telle qu'il agisse directement sur ladite tige de rattrapage (8, 9).

3. Dispositif à rattraper le jeu dû à l'usure selon la revendication 1, **caractérisé en ce que** ledit système d'entraînement électrique est configuré sous la forme d'un ensemble moteur et réducteur commuté à courant continu (12).

4. Dispositif à rattraper le jeu dû à l'usure selon une quelconque des revendications précédentes,, **caractérisé en ce que** des lignes électriques de commande et/ou d'alimentation sont incorporées dans un couvercle de fermeture (13) du frein.

5. Procédé à commander un dispositif à rattraper le jeu dû à l'usure selon une quelconque des revendications précédentes, **caractérisé par** la suite suivante des opérations:
(A) après une décompression complète de la pression de service dans le cylindre de freinage, un mouvement continué d'avance ou de rattrapage de ladite tige ou respectivement desdites tiges de rattrapage (8, 9) est réalisé, qui est dimensionné de façon telle qu'une élimination complète du jeu d'aération soit achevée;
(B) ladite tige ou respectivement lesdites tiges de rattrapage (8, 9) est/sont rappelée/rappelées par un montant prédéterminé moyennant un système d'entraînement électrique (12), qui correspond à un jeu prédéterminé de consigne d'aération.

6. Procédé à commander un dispositif de rattrapage du jeu dû à l'usure pour un frein à disque à commande pneumatique pour véhicules, dans lequel
(a) un levier rotatif (5) commandé au cours du serrage du frein agit sur au moins un élément déplaçable (7) qui commande au moins une de préférence deux tiges de rattrapage (8, 9), pressant une garniture de frein en une direction vers un disque à frein;
(b) ledit dispositif de rattrapage étant configuré d'une façon telle qu'il rattrape le jeu desdites tiges de rattrapage (8, 9) en continuant leur mouvement rotatoire;
(c) ledit dispositif de rattrapage comprenant un système d'entraînement électrique (12), qui rattrape le jeu de ladite tige ou respectivement desdites tiges de rattrapage (8, 9) par un mouvement rotatoire,
**caractérisé par** la suite suivante des opérations:
(A) après une décompression complète de la pression de service dans le cylindre de freinage, un mouvement de rattrapage de ladite tige ou respectivement desdites tiges de rattrapage (8, 9) est réalisé, qui est dimensionné de façon telle qu'une élimination complète du jeu d'aération soit achevée;
(B) ladite tige ou respectivement lesdites tiges de rattrapage (8, 9) est/sont rappelée(s) par un montant prédéterminé moyennant un système d'entraînement électrique (12), qui correspond à un jeu prédéterminé de consigne d'aération.

7. Procédé selon la revendication 5 ou 6, **caractérisé en ce que** le rattrapage du jeu est réalisé dès qu'un nombre prédéterminé des opérations de serrage du frein est achevé.

8. Procédé selon une quelconque des revendications 5 à 7, **caractérisé en ce que** l'usure de la garniture et/ou une usure inclinée de l'usure éventuellement présente est/sont surveillée(s) et corrigée(s).
